Europäisches Patentamt

**European Patent Office**

Office européen des brevets

(19)

(11) Publication number: **0 059 947**
A1

(12) # EUROPEAN PATENT APPLICATION

(21) Application number: **82101705.0**

(22) Date of filing: **04.03.82**

(51) Int. Cl.³: **B 65 G 15/36**

(30) Priority: **06.03.81 IT 2016281**

(43) Date of publication of application:
**15.09.82 Bulletin 82/37**

(84) Designated Contracting States:
**BE DE FR GB NL SE**

(71) Applicant: **INDUSTRIE PIRELLI S.p.A.**
**Piazzale Cadorna, 5**
**I-20123 Milan(IT)**

(72) Inventor: **Brollo, Aurelio**
**Viale Piceno, 14/A**
**Milan(IT)**

(74) Representative: **Dr. E. Wiegand Dipl.-Ing. W. Niemann**
**Dr. M. Kohler Dipl.-Ing.G. Gernhardt Dipl.-Ing. J. Glaeser**
**Patentanwälte**
**Herzog-Wilhelm-Strasse 16**
**D-8000 München 2(DE)**

(54) Conveyor belt and transport device incorporating said conveyor belt.

(57) The invention refers to a conveyor belt whose tension resistant structure is concentrated in the central zone of the belt and hence, the borders of the belt are flexible. The invention also refers to a transport device incorporating a conveyor belt as described above.

Fig. 4

EP 0 059 947 A1

# CONVEYOR BELT AND TRANSPORT DEVICE INCORPORATING SAID CONVEYOR BELT

The present invention refers to a conveyor belt for transporting materials, in particular bulk material, and to a transport device incorporating a conveyor belt according to the invention.

Many types of conveyor belts are known, which differ one from the other either by the material constituting the belt, or by the resistant structure embedded in the belt, to which is entrusted the task of resisting all the stresses to which the conveyor belt is subjected during its function in a transport device.

There are moreover numerous known types of transport devices utilizing conveyor belts for transporting materials and in particular bulk materials, that differ one from the other by the structure of the conveyor belt that is mounted in them, by the nature of the ground upon which the transport device is positioned and by the quantity and the type of the material to be transported.

However, the known conveyor belts have in common a resistant structure which extends for the entire width of the belt and which is embedded in the material of the belt.

Consequently, when the resistant structure of the belt is formed out of cords only, it results that there is in the belt a plurality of flexible and inextensible cords which are equal and parallel one to the other, and which are disposed according to the greater development of the belt, at equal intervals from one another, occupying the entire width of the belt.

The known conveyor belts, owing to the particular characteristics of the above-indicated resistant structure, present a series of drawbacks that, in their turn, translate into a series of drawbacks in the known transport devices that incorporate the said known conveyor belts.

A first drawback of the known conveyor belts is the high rigidity they possess when they are deformed to a concave shape once they are installed in a transport device i.e. in assuming, in a transversal cross-section to their greater development, trapezoidal configuration in which the central zone of the belt constitutes the smaller base while the lateral zones of the belt form the sides of said trapezoidal configuration.

The difficulty in deforming the belt to concave shape which is the shape that must necessarily be assumed by the conveyor belt in the tract where it is loaded with bulk material, forces the known conveyor belts to assume an open concave shape, and results in non-uniform stresses in the resistant structure of the known conveyor belts.

These two facts just mentioned above are the cause of drawbacks, both with regard to the known conveyor belts as well as in the known transport devices incorporating the known conveyor belts.

The drawbacks of the known conveyor belts arise from the fact that their resistant structure being uniform for the entire width of the belt, but instead the distribution of the stresses in the transversal section of the belt being non-uniform, the dimensioning of the resistant structure is realized on the basis of the hypothesis that the entire transversal section of the

0059947

belt is subjected to uniform stresses of a value equal to that of the highest localized stresses, which does not correspond with the truth of the matter.

This translates into a non-optimal tension resistant structure of the conveyor belt. The drawbacks in the known transport devices which incorporate known conveyor belts are: the necessity of high energy consumption for actioning the devices, and the complexity of the structure of the known transport devices that is a direct consequence of the open concave shape assumed in the device by the known conveyor belts.

In fact, the open concave shape assumed in a transport device by the known conveyor belt, involves the following:
- It is necessary to foresee the presence of borders at the sides of the conveyor belt for protecting the bulk material transported from the action of wind.
- It is necessary for all the rollers of each set of supporting and guide rollers of the conveyor belt, to be robust in the zone where the material has to be transported.
- It is necessary to foresee automatic centering devices for each set of supporting and guide rollers for the conveyor belt in the zones where the material is transported.
- It is necessary to have recourse to removing any earth, should it present bumps and gutters of a very accentuated slope, so as to avoid the curvature of the belt lay-out becoming less than a minimum value, depending on the friction coefficient of the bulk material transported.
- A high energy consumption is had for actioning the transport device, owing to the high friction forces originating in the device due to the open concave shape that the belt must assume for transporting the materials.

- Difficulty for the conveyor belt in assuming every type of curvature inside the device, such as for example those necessary for causing that in its return path the conveyor belt will assume for a certain tract the vertical configuration, so as to clean the surface of the conveyor belt itself.

The aim of the present invention is to overcome all the drawbacks listed above of the known conveyor belts and of the known transport devices that incorporate known conveyor belts.

What forms one object of the present invention is a conveyor belt comprising at least one band of elastomeric or like material, embedding a tension resistant structure, and characterized by the fact that said tension resistant structure occupies the central zone of the belt.

A further object of the present invention is a transport device comprising a frame to the ends of which are fixed a driving roller or a return roller, a conveyor belt stretched out between the driving roller and the return roller, and a plurality of sets of idle rollers that are rotatable around their axis, said idle rollers being fixed to the supporting frame of the transport device where the rollers of each set have their axis of rotation coplanar, and characterized by the fact that the conveyor belt is a belt of elastomeric or like material, embedding a tension resistant structure in its central zone.

The present invention will be better understood from the following detailed description, made solely by way of non-limiting example and with reference to the FIGURES of the attached drawing sheet, wherein:

FIG. 1   shows in a perspective view a tract of a conveyor belt according to the invention;

FIG. 2   shows in a perspective view a tract of a further embodiment of a conveyor belt according to the invention;

FIG. 3   shows a perspective view of a transport device having a conveyor belt according to the invention;

FIG. 4   shows an enlarged view of a detail of the device of FIG. 3.

According to the more general solution idea of a conveyor belt according to the present invention, said conveyor belt comprises at least one band of elastomeric or like material, embedding a flexible resistant structure that is inextensible under tension stresses  present in the conveyor belt when it is inserted and/or when it is functioning in a transport device for materials utilizing a conveyor belt.

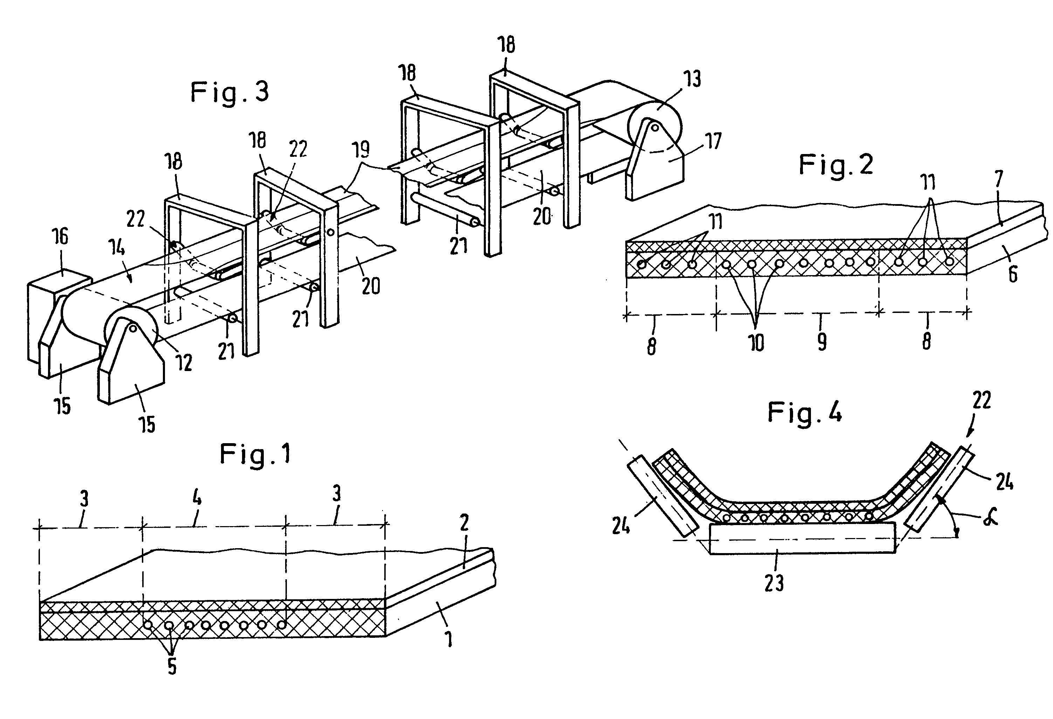

In FIG. 1 there is shown a tract of a conveyor belt according to the invention in one form of realization.

As can be seen in FIG. 1 the conveyor belt comprises a strip 1 of an elastomeric compound, doubled-up with a strip 2 also of an elastomeric compound having a composition which is diverse to that of strip 1. More particularly, the strip 1 is made of an elastomeric compound having a composition that is per se known to a technician of the field, for resisting flexional fatigue stresses, while the strip 2 is made of an elastomeric compound having a composition that is per se known to a technician of the field for resisting the action of the materials that the conveyor belt has to transport, and in particular for resisting the abrasive action of the materials to be transported.

The strip 1 is ideally dividable into three zones, and precisely into two lateral zones each indicated in the FIGURE with the reference numeral 3, and into a central zone indicated in the FIGURE with the reference numeral 4.

Moreover, in the central zone 4 of the strip 1 there is embedded a flexible and inextensible resistant structure constituted by a plurality of flexible and inextensible cords 5, for example of steel, polyester, aliphatic and/or aromatic polyamides and the like. The axes of the cords 5 are parallel and coplanar to each other and are disposed according to the greater dimension of the belt.

In FIG. 2 there is shown a conveyor belt according to the present invention in a further embodiment. As can be seen in FIG. 2, the conveyor belt represented there, comprises a strip 6 of elastomeric material having a composition identical to that of the strip 1 of the conveyor belt of FIG. 1, and a strip 7 doubled-up with strip 6 and having a composition identical to that of strip 2 in the conveyor belt of FIG. 1.

The strip 6 is ideally divided into three zones, and precisely into two lateral zones 8 and one central zone 9.

Moreover, in strip 6 there is embedded a resistant structure formed by a plurality of cords the axes of which are parallel and coplanar and disposed accord-ing to the greater development of the conveyor belt.-

More particularly, within the central zone 9 of the strip 6 there are embedded flexible and inextensible cords lo, that are identical to the cords 5 of the conveyor belt of FIG. 1, while within the lateral zones 8 of the strip 6 there are embedded flexible and extensible cords 11. More particularly, the cords 11 have an extensibility that can depend either upon the nature of the material from which they are constituted, or on the geometrical configuration imparted to the wires or filaments forming said cords, or else can depend on both these causes.

In any case the extensibility of the cords 11 must be such that the extensibility of a cord more distant from the central zone of the strip 6 is greater than the extensibility of the cord that is nearest to said central zone 9 of the strip 6.

Moreover, the law according to which the extensibility of the cords 11 must vary in function of their distance from the central zone 9 of the strip 6, i.e. from the central zone of the belt, is as follows:

$$\triangle_x = \sqrt{x^2 + 2y^2 (1 - \cos\alpha)} - x$$

where:

$\triangle x$ is the variation of the length of a cord;

$x$ is the length between the position, in which the belt abandons the concave shape, and the position where it begins to assume the flat shape;

$y$ is the distance between the respective cord and the central zone of the belt;

α is the angle of inclination of the border of the belt with respect to its central zone.

As stated previously, what forms one object of this invention is also a transport device for materials, incorporating a conveyor belt that is also one object of the present invention.

A transport device incorporating a conveyor belt according to the present invention is represented in FIG. 3. As can be seen in FIG. 3, the device comprises a pair of rollers 12 and 13, between which is mounted and stretched a conveyor belt according to the present invention.

More particularly, the roller 12, the axis of which is journalled in supports 15 is rotated by a motor 16, while the roller 13 has an axis that rotates freely with respect to supports 17.

Between the rollers 12 and 13 there is present a metallic structure constituted by a plurality of portals 18, anchored to the ground, inside of which is disposed a conveyor belt 14 which, in being stretched between the two rollers 12 and 13, forms two runs, precisely  an upper run 19 upon which is deposited the material for being transported, and a lower run 2o which is the return run of the conveyor belt.

In correspondence of each portal 18 there are foreseen supports for the upper run 19 and the lower run 2o of the conveyor belt 14.

The supports of the lower run 2o of the conveyor belt 14 consist of rollers 21 that freely rotate around their axes, that are journalled in the supports of the portals 18.

The supports of the upper run 19 of the conveyor belt 14 consist of sets of rollers 22, one set for each portal, freely rotating around their axes, and in FIG. 4 there is represented in an enlarged scale a set of rollers 22 for clearly pointing out the details.

In fact, as can be seen in FIG. 4, the set of rollers 22 comprises a central roller 23 the length of which is equal to the length of the central zone 4 or 9 of a conveyor belt according to the invention, and two lateral rollers 24 apt for being engaged with the lateral zones 3 or 8 into which the conveyor belt according to the present invention is ideally divided.

Moreover, the central roller 23 has a diameter which is greater than the diameter of the rollers 24. The angle $\alpha$ formed between the axes of rotation of the rollers 24 and the axis of rotation of the roller 23 is an angle comprised between $20^{\circ}$ and $90^{\circ}$.

The operation of a transport device incorporating a conveyor belt according to the present invention is as follows:

With the motor 16 operating there is had the setting into clockwise rotation of the roller 12, and this causes the movement of the conveyor belt 14 that puts the roller 13 into rotation. In correspondence of the tract of the run 19 of the conveyor belt 14 comprised between the roller 13 and the portal 18 that is nearest to it, there is loaded by means of a hopper (not shown) bulk material onto belt 14.

The conveyor belt 14, running along the sets 22 of rollers, drags along with it the bulk material positioned on it, and unloads this material from the roller 12.

A conveyor belt and a transport device having a belt according to the invention consent to reach the proposed aims, and the reasons for which these proposed aims are reached, result evidently from the following considerations.

The facts that the conveyor belt has flexible borders and is inextensible in the central zone, allow to vary as desired the inclination of the lateral zones with respect to the central zone, thus adapting as closely as desired the configuration of the belt to a hopper, which configuration must be assumed by the belt when transporting materials, and in particular bulk materials.

This fact, first and foremost, allows to obtain an optimization of the resistant structure of a conveyor belt according to the invention because said tension resistant structure, to be positioned in a zone that is not subject to variations in its configuration, is not subject to any stress due to variations of this configuration and hence it is only subjected to uniform stresses.

In the second place, with a conveyor belt according to the invention it is possible to increase the load capacity, above all in the case of bulk materials having a low friction coefficient and having small diametral dimensions and being of a regular shape.

Moreover, thanks to the concave shape of the conveyor belt, i.e. to the high inclination that is assumable by the lateral zones with respect to the central zone, the following two advantages are obtained:
- The stresses, imparted by the conveyor belt on the lateral rollers of the sets of rollers, are small, and hence said lateral rollers, as a result being little stressed, can have a diameter which is smaller than that of the central roller. This signifies a simplification of transport devices incorporating conveyor belts according to the present invention.

- The high inclination of the lateral zones of the conveyor belt constitutes per se a protection for the material transported against the action of wind, and this allows for the elimination of the wind-breaker-borders in the transport device.

Moreover, thanks to the fact that a conveyor belt according to this invention is narrower with respect to known belts at a given volume of the material transported, and to its closer adaption of deformation to concave shape and hence, having a less overall dimension, the entire structure of the transport device according to the invention is reduced in its transversal dimensions.

Moreover, the structure of the conveyor belt accord- ing to the invention consents for being able to allow the conveyor belt to assume curvatures that are also accentuated in the direction of the lay-out, with eliminating the need for levelling the ground where the transport device has to be installed, and also eliminating the necessity of having automatic centering devices for the conveyor belt, in correspondence of the sets of rollers, since this action is carried out by the lateral rollers of each set of rollers.

Although there have been illustrated and described certain forms of realization according to the present invention there must be intended as being comprised within the ambit of the invention, all possible variations that are available to any technician of the field.

WHAT IS CLAIMED IS:

1. Conveyor belt comprising at least one band of elastomeric or like material, embedding a tension resistant structure, characterized by the fact that said tension resistant structure occupies the central zone (4 or 9) of the belt.

2. Conveyor belt according to claim 1, characterized by the fact that the tension resistant structure occupying the central zone of the belt consists of · a plurality of flexible and inextensible cords (5 or 1o) that are parallel and coplanar to each other and disposed along the greater dimension of the belt.

3. Conveyor belt according to anyone of the previous claims, characterized by the fact that in the lateral zones (8) of the belt there are embedded flexible and extensible cords (11) disposed along the greater dimension of the belt, the extensibility of these extensible cords nearer to the lateral borders of the belt being greater than that of the extensible cords nearer to the central zone (9) of the belt.

4. Conveyor belt according to claim 3, characterized by the fact that the extensibility of the extensible cords disposed in the lateral zones of the belt in function of their distance from the central zone of the belt, obeys the following equation:

$$\Delta x = \sqrt{x^2 + 2y^2 (1 - \cos\alpha)} - x$$

where:

$\Delta x$ is the variation of the length of a cord;
    $x$ is the intervening length between the position
        in which the belt abandons the concave shape

and the position where it begins to assume the flat shape;

y is the distance between the generic cord and the central zone of the belt;

α is the angle of inclination of the edge of the belt with respect to the central zone of the latter.

5. Transport device comprising a frame to the ends of which are fixed a driving roller or a return roller, a conveyor belt stretched out between the driving roller and the return roller, and a plurality of sets of idle rollers that are rotatable around their axes, said rollers being fixed to the supporting frame of the transport device, and the rollers of each set having their axes of rotation coplanar, characterized by the fact that the conveyor belt (14) is a belt of elastomeric or like material, embedding a tension resistant structure in its central zone.

6. Transport device according to claim 5, characterized by the fact that the tension resistant structure occupying the central zone of the belt consists of a plurality of flexible and inextensible cords, that are parallel and coplanar to each other and disposed along the greater dimension of the belt.

7. Transport device according to any of the claims 5 and 6, characterized by the fact that in the lateral zones (8) of the belt there are embedded flexible and extensible cords (11) disposed according to the greater dimension of the belt, with the extensibility of the extensible cords that are nearer to the lateral borders of the belt being greater than that of the extensible cords that are nearer to the central zone (9) of the belt.

8.  Transport device according to any of the claims 5 to 7, characterized by the fact that in the sets (22) of rollers that are idle around their axes, fixed to the frame, the angle ($\alpha$) formed between the axis of rotation of the central roller (23) and the axis of rotation of each lateral roller (24) is comprised between $20^{\circ}$ and $90^{\circ}$.

Fig. 3

Fig. 2

Fig. 1

Fig. 4

0059947

1/1

## DOCUMENTS CONSIDERED TO BE RELEVANT

| Category | Citation of document with indication, where appropriate, of relevant passages | Relevant to claim |
|---|---|---|
| X | GB - A - 2 006 674 (SCHNEIDER)<br>* Page 2, lines 25-54; fig. 1,2* <br>-- | 1,2 |
| A | DE - B - 1 221 139 (CLOUTH)<br>* Column 4, lines 14-22; fig. 1 * <br>-- | 1,2,3 |
| A | US - A - 3 615 152 (BOUZAT)<br>-- | 1 |
| A | US - A - 3 545 602 (MORRIS BEHAN MC CULLAGH)<br>---- | 5 |

**CLASSIFICATION OF THE APPLICATION (Int. Cl. ³)**

B 65 G 15/36

**TECHNICAL FIELDS SEARCHED (Int.Cl. ³)**

B 65 G 15/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | |
|---|---|---|
| X | | |

| Place of search | Date of completion of the search | Examiner |
|---|---|---|
| VIENNA | 26-05-1982 | PISSENBERGER |

EPO Form 1503.1 06.78